# EUROPEAN PATENT APPLICATION

(11) **EP 4 098 977 A1**
(43) Date of publication of application: **07.12.2022**
(21) Application number: 22173837.0
(22) Date of filing: 17.05.2022
(51) Int. Cl.: G01C 21/34, B60W 30/08, B60W 40/02, B60W 50/14, G01C 21/36, G05D 1/02, G06V 20/56, G08G 1/16

(54) **VEHICLE SYSTEM WITH MECHANISM FOR DETERMINING CLEAR PATH AND METHOD OF OPERATION THEREOF**

(30) Priority: 04.06.2021 US 202117339720
(71) Applicant: TeleNav, Inc., Santa Clara, CA 95054 (US)
(72) Inventor: Aist, Gregory Stewart, Santa Clara, CA 95054 (US); Carter, Casey Thomas, Santa Clara, CA 95054 (US); Grover, Shalu, Santa Clara, CA 95054 (US); Santamaria, Michele, Santa Clara, CA 95054 (US)
(74) Representative: Kretschmann, Dennis

(57) **Abstract**

A method of operation of a vehicle system including capturing a current image from a current location towards a travel direction along a travel path; generating an image category for the current image based on a weather condition, the current location, or a combination thereof; determining a clear path towards the travel direction of the travel path based on the image category, the current image, and a previous image; and communicating the clear path for assisting in operation of a vehicle.

## Description

### TECHNICAL FIELD

An embodiment of the present invention relates generally to a vehicle system, and more particularly to a system that can determine a clear travel path.

### BACKGROUND ART

Modern vehicle systems are providing increasing levels of functionality to support vehicle control including travel path determination. Technology has enabled increased path determination for vehicle control. Real-time determination of a safe path is still challenging. Research and development in the existing technologies can take a myriad of different directions.

Thus, a need remains for a vehicle system with a clear path mechanism. In view of the ever-increasing commercial competitive pressures, along with growing consumer expectations and the diminishing opportunities for meaningful product differentiation in the marketplace, it is increasingly critical that answers be found to these problems. Additionally, the need to reduce costs, improve efficiencies and performance, and meet competitive pressures adds an even greater urgency to the critical necessity for finding answers to these problems.

Solutions to these problems have been long sought but prior developments have not taught or suggested any solutions and, thus, solutions to these problems have long eluded those skilled in the art.

### SUMMARY

An embodiment of the present invention provides a method of operation of a vehicle system including: capturing a current image from a current location towards a travel direction along a travel path; generating an image category for the current image based on a weather condition, the current location, or a combination thereof; determining a clear path towards the travel direction of the travel path based on the image category, the current image, and a previous image; and communicating the clear path for assisting in operation of a vehicle.

An embodiment of the present invention provides a vehicle system, including: a communication circuit configured to receive a current image from a current location along a direction of travel of a traversal path of a travel path of a first device, second device or a combination thereof; a control circuit, coupled to the communication circuit, configured to generate an image category for the current image based on a weather condition, the current location, or a combination thereof, a clear path towards the travel direction of the travel path based on the image category, the current image, and a previous image, and communicate the clear path for assistance in operating a vehicle.

An embodiment of the present invention provides a non-transitory computer readable medium including instructions executable by a control circuit for a vehicle system, including: capturing a current image from a current location towards a travel direction along a travel path; generating an image category for the current image based on a weather condition, the current location, or a combination thereof; determining a clear path towards the travel direction of the travel path based on the image category, the current image, and a previous image; and communicating the clear path for assisting in operation of a vehicle.

Certain embodiments of the invention have other steps or elements in addition to or in place of those mentioned above. The steps or elements will become apparent to those skilled in the art from a reading of the following detailed description when taken with reference to the accompanying drawings.

### BRIEF DESCRIPTION OF THE DRAWINGS

FIG. 1 is a vehicle system with a determination of clear path mechanism in an embodiment of the present invention.
FIG. 2 is an example a top plan view of a vehicle for the vehicle system.
FIG. 3 is an example of a block diagram of the vehicle system.
FIG. 4 is an example of displays of a travel path for the vehicle system.
FIG. 5 is an example of a further display along the travel path of the vehicle system.
FIG. 6 is an example of a yet further display of the travel path for the vehicle system.
FIG. 7 is an example of the obstruction along the travel path.
FIG. 8 is an example of a display of a vehicle system along a travel path in a further embodiment.
FIG. 9 is an example of a control flow of the vehicle system in an embodiment of the present invention.
FIG. 10 is a flow chart of a method of operation of a vehicle system in an embodiment of the present invention.

### BEST MODE FOR CARRYING OUT THE INVENTION

The following embodiments are described in sufficient detail to enable those skilled in the art to make and use the invention. It is to be understood that other embodiments would be evident based on the present disclosure, and that system, process, or mechanical changes may be made without departing from the scope of an embodiment of the present invention.

In the following description, numerous specific details are given to provide a thorough understanding of the invention. However, it will be apparent that the invention can be practiced without these specific details. In order to avoid obscuring an embodiment of the present invention, some well-known circuits, system configurations, and process steps are not disclosed in detail.

The drawings showing embodiments of the system are semi-diagrammatic, and not to scale and, particularly, some of the dimensions are for the clarity of presentation and are shown exaggerated in the drawing figures. Similarly, although the views in the drawings for ease of description generally show similar orientations, this depiction in the figures is arbitrary for the most part. Generally, the invention can be operated in any orientation. The embodiments have been numbered first embodiment, second embodiment, etc. as a matter of descriptive convenience and are not intended to have any other significance or provide limitations for an embodiment of the present invention. The terms first, second, etc. can be used throughout as part of element names and are used as a matter of descriptive convenience and are not intended to have any other significance or provide limitations for an embodiment.

The term "module" referred to herein can include or be implemented as software, hardware, or a combination thereof in the present invention in accordance with the context in which the term is used. For example, the software can be machine code, firmware, embedded code, and application software. The software can also include a function, a call to a function, a code block, or a combination thereof. Also for example, the hardware can be gates, circuitry, processor, computer, integrated circuit, integrated circuit cores, a pressure sensor, an inertial sensor, a microelectromechanical system (MEMS), passive devices, physical non-transitory memory medium including instructions for performing the software function, a portion therein, or a combination thereof to control one or more of the hardware units or circuits. Further, if a module is written in the apparatus claims section below, the modules are deemed to include hardware circuitry for the purposes and the scope of apparatus claims.

The modules in the following description of the embodiments can be coupled to one other as described or as shown. The coupling can be direct or indirect, without or with, respectively, intervening items between coupled items, or a combination thereof. The coupling can be by physical contact, by communication between items or a combination thereof.

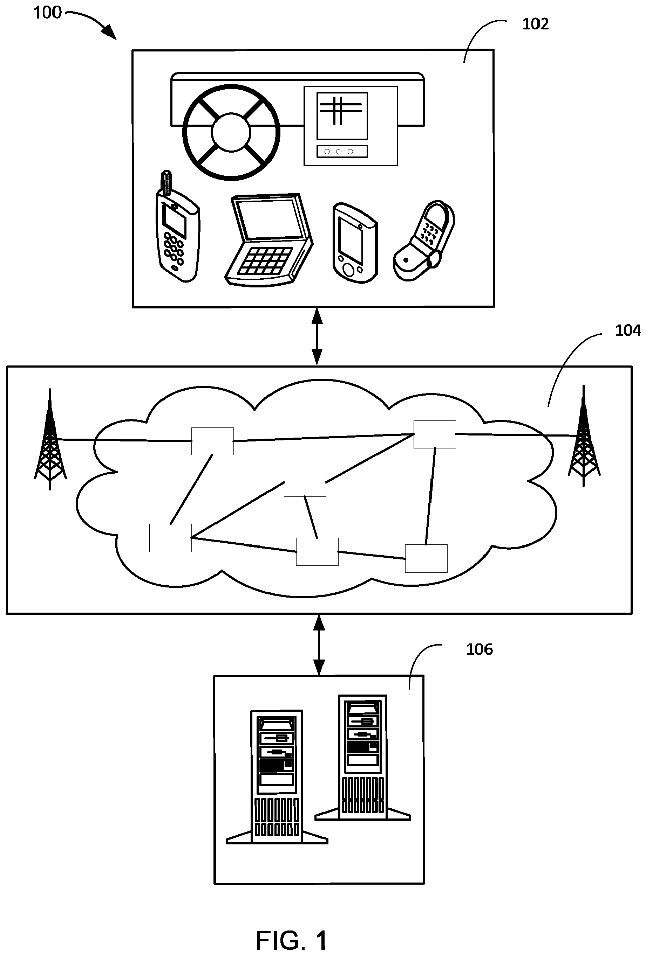

Referring now to FIG. 1, therein is shown a vehicle system 100 with a determination of clear path mechanism in an embodiment of the present invention. The vehicle system 100 includes a first device 102, such as a client or a server, connected to a second device 106, such as a client or server. The first device 102 can communicate with the second device 106 with a communication path 104, such as a wireless or wired network.

For example, the first device 102 can be of any of a variety of devices, such as a vehicle, a telematics system in a vehicle, a computing device, a cellular phone, a tablet computer, a smart phone, a notebook computer, or vehicle embedded telematics system. The first device 102 can couple, either directly or indirectly, to the communication path 104 to communicate with the second device 106 or can be a stand-alone device.

The second device 106 can be any of a variety of centralized or decentralized computing devices, sensor devices to take measurements or record environmental information, such as sensor instruments, sensor equipment, or a sensor array. For example, the second device 106 can be a multimedia computer, a laptop computer, a desktop computer, grid-computing resources, a virtualized computer resource, cloud computing resource, routers, switches, peer-to-peer distributed computing devices, or a combination thereof.

The second device 106 can be mounted externally or internally to a vehicle, centralized in a single room or within a vehicle, distributed across different rooms, distributed across different geographical locations, embedded within a telecommunications network. The second device 106 can couple with the communication path 104 to communicate with the first device 102.

For illustrative purposes, the vehicle system 100 is described with the second device 106 as a computing device, although it is understood that the second device 106 can be different types of devices, such as a standalone sensor or measurement device. Also for illustrative purposes, the vehicle system 100 is shown with the second device 106 and the first device 102 as end points of the communication path 104, although it is understood that the vehicle system 100 can include a different partition between the first device 102, the second device 106, and the communication path 104. For example, the first device 102, the second device 106, or a combination thereof can also function as part of the communication path 104.

The communication path 104 can span and represent a variety of networks and network topologies. For example, the communication path 104 can include wireless communication, wired communication, optical, ultrasonic, or the combination thereof. Satellite communication, cellular communication, Bluetooth, Infrared Data Association standard (IrDA), wireless local area network (WLAN) products that are based on the Institute of Electrical and Electronics Engineers' (IEEE) 802.11 standards (Wi-Fi), and worldwide interoperability for microwave access (WiMAX) are examples of wireless communication that can be included in the communication path 104. Ethernet, digital subscriber line (DSL), fiber to the home (FTTH), and plain old telephone service (POTS) are examples of wired communication that can be included in the communication path 104. Further, the communication path 104 can traverse a number of network topologies and distances. For example, the communication path 104 can include direct connection, personal area network (PAN), local area network (LAN), metropolitan area network (MAN), wide area network (WAN), or a combination thereof.

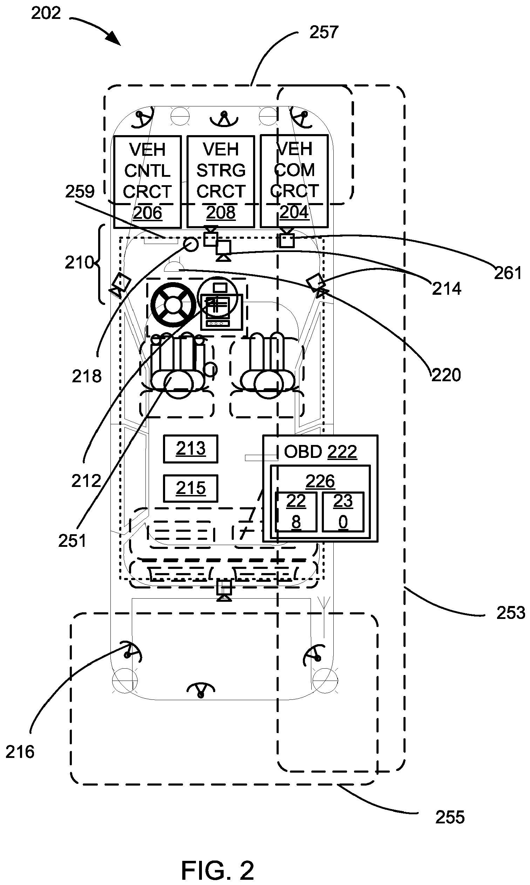

Referring now to FIG. 2, therein is shown an example a top plan view of a vehicle 202 for the vehicle system 100 of FIG. 1. As an example, the vehicle system 100 can include or interact with the first device 102 of FIG. 1 as the vehicle 202. The vehicle 202 can also include one or more of environmental sensors 210. The vehicle 202 is an object or a machine used for transporting people or goods. The vehicle 202 can also be capable of providing assistance in maneuvering or operating the object or the machine.

The vehicle 202 can include or represent different types of vehicles. For example, the vehicle 202 can be an electric vehicle, a combustion vehicle, or a hybrid vehicle. Also for example, the vehicle 202 can be an autonomous vehicle or non-autonomous vehicle. As a specific example, the vehicle 202 can include a car, a truck, a cart, a boat, an airplane, or a combination thereof.

The vehicle 202 can include a device, a circuit, one or more specific sensors, or a combination thereof for providing assistance or additional information to control, maneuver, or operate the vehicle 202. The vehicle 202 can include a vehicle communication circuit 204, a vehicle control circuit 206, a vehicle storage circuit 208, other interfaces, or a combination thereof.

The vehicle 202 can also include on-board diagnostics 222 (OBD) that can be accessed by the vehicle control circuit 206. As an example, the vehicle control circuit 206 can access the on-board diagnostics 222 with the vehicle communication circuit 204. The vehicle 202 can store and retrieve the on-board diagnostics 222 to and from the vehicle storage circuit 208.

The on-board diagnostics 222 represent information about the vehicle 202. For example, the on-board diagnostics 222 can provide status or the state of the vehicle 202 or a portion thereof.

The vehicle storage circuit 208 can include a functional unit or circuit integral to the vehicle 202 and configured to store and recall information. The vehicle storage circuit 208 can be a volatile memory, a nonvolatile memory, an internal memory, an external memory, or a combination thereof. For example, the vehicle storage circuit 208 can be a nonvolatile storage such as non-volatile random access memory (NVRAM), Flash memory, disk storage, or a volatile storage such as static random access memory (SRAM).

The vehicle storage circuit 208 can store vehicle software, other relevant data, such as input information, information from sensors, processing results, information predetermined or preloaded by the vehicle system 100 or vehicle manufacturer, or a combination thereof. The vehicle storage circuit 208 can store the information for the on-board diagnostics 222.

The vehicle control circuit 206 can include a function unit or circuit integral to the vehicle 202 and configured to execute or implement instructions. The vehicle control circuit 206 can execute or implement the vehicle software to provide the intelligence of the vehicle 202, the vehicle system 100, or a combination thereof. The vehicle control circuit 206 can respond to requests for the on-board diagnostics 222. The request can be from other parts of the vehicle 202, the vehicle system 100, or a combination thereof or external to the vehicle system 100.

The vehicle control circuit 206 can be implemented in a number of different manners. For example, the vehicle control circuit 206 can be a processor, an application specific integrated circuit (ASIC) an embedded processor, a microprocessor, a hardware control logic, a hardware finite state machine (FSM), a digital signal processor (DSP), or a combination thereof. As a more specific example, the vehicle control circuit 206 can include an engine control unit, one or more central processing unit, or a combination thereof.

The vehicle communication circuit 204 can include a function unit or circuit integral to the vehicle 202 and configured to enable external communication to and from the vehicle 202. For example, the vehicle communication circuit 204 can permit the vehicle 202 to communicate with the first device 102, the second device 106 of FIG. 1, the communication path 104 of FIG. 1, or a combination thereof. The vehicle communication circuit 204 can provide the on-board diagnostics 222 to other portions of the vehicle 202, the vehicle system 100, or a combination thereof or external to the vehicle system 100.

The vehicle communication circuit 204 can also function as a communication hub allowing the vehicle 202 to function as part of the communication path 104 and not limited to be an end point or terminal circuit to the communication path 104. The vehicle communication circuit 204 can include active and passive components, such as microelectronics or an antenna, for interaction with the communication path 104. For example, the vehicle communication circuit 204 can include a modem, a transmitter, a receiver, a port, a connector, or a combination thereof for wired communication, wireless communication, or a combination thereof.

The vehicle communication circuit 204 can couple with the communication path 104 to send or receive information directly between the vehicle communication circuit 204 and the first device 102, the second device 106, or a combination thereof as endpoints of the communication, such as for direct line-of-sight communication or peer-to-peer communication. The vehicle communication circuit 204 can further couple with the communication path 104 to send or receive information through a server or another intermediate device in between endpoints of the communication.

The vehicle 202 can further include various interfaces. The vehicle 202 can include one or more interfaces for interaction or internal communication between functional units or circuits of the vehicle 202. For example, the vehicle 202 can include one or more interfaces, such as drivers, firmware, wire connections or buses, protocols, or a combination thereof, for the vehicle storage circuit 208, the vehicle control circuit 206, or a combination thereof.

The vehicle 202 can further include one or more interfaces for interaction with an occupant, an operator or a driver, a passenger, or a combination thereof relative to the vehicle 202. For example, the vehicle 202 can include a user interface including input or output devices or circuits, such as a screen or touch screen, a speaker, a microphone, a keyboard or other input devices, an instrument panel, or a combination thereof.

The vehicle 202 can further include one or more interfaces along with switches or actuators for physically controlling movable components of the vehicle 202. For example, the vehicle 202 can include the one or more interfaces along with the controlling mechanisms to physically perform and control the maneuvering of the vehicle 202, such as for automatic driving or maneuvering features.

The functional units or circuits in the vehicle 202 can work individually and independently of the other functional units or circuits. The vehicle 202 can work individually and independently from the first device 102, the communication path 104, the second device 106, other devices or vehicles, or a combination thereof.

The functional units or circuits described above can be implemented in hardware. For example, one or more of the functional units or circuits can be implemented using the a gate, circuitry, a processor, a computer, integrated circuit, integrated circuit cores, a pressure sensor, an inertial sensor, a microelectromechanical system (MEMS), a passive device, a physical non-transitory memory medium containing instructions for performing the software function, a portion therein, or a combination thereof.

The environmental sensors 210 are each a device for detecting or identifying aspects of the environment relating to the vehicle 202. The environmental sensors 210 can detect, identify, determine, or a combination thereof for the vehicle 202 itself, such as for status or movement thereof. The environmental sensors 210 can detect, identify, determine, or a combination thereof for environment within a cabin of the vehicle 202, an environment external to and surrounding the vehicle 202, or a combination thereof.

For example, the environmental sensors 210 can include a location-movement sensor 212, a visual sensor 214, a radar sensor 216, an accessory sensor 218, a volume sensor 220, or a combination thereof. The location-movement sensor 212 can identify or calculate a geographic location of the vehicle 202, determine a movement of the vehicle 202, determine the time stamp of the movement or of the location, or a combination thereof. Examples of the location-movement sensor 212 can include an accelerometer, a speedometer, a global positioning system (GPS) receiver or device, a gyroscope or a compass, or a combination thereof. The vehicle 202 can include the environmental sensors 210, such as thermal sensor, other than or in addition to the location-movement sensor 212. The environmental sensors 210 can capture and provide temperature readings for portions of the vehicle 202. The environmental sensors 210 can also capture and provide temperature readings, and other atmospheric conditions external to the vehicle 202. The environmental sensors 210 can also capture the time stamp for each of the temperature readings.

The visual sensor 214 can include a device for detecting or determining visual information representing the environment external to, surrounding, or internal to the vehicle 202. The visual sensor 214 can capture still images, video, or a combination thereof. The visual sensor 214 can capture the time stamp, the geographic coordinates, or a combination thereof, of the still images, video, or a combination thereof. As an example, the visual sensor 214 can include a camera attached to or integral with the vehicle 202. For example, the visual sensor 214 can include a forward-facing camera, a rear-view or back-up camera, a side-view or a blind-spot camera, or a combination thereof. Also for example, the visual sensor 214 can include an infrared sensor or a night vision sensor.

The visual sensor 214 can further include a camera on the first device 102 connected to and interacting with the vehicle 202. The visual sensor 214 can further include a cabin camera for detecting or determining visual information inside the vehicle 202 or the cabin of the vehicle 202.

The visual sensor 214 can include a filter for detecting or determining visual information representing the environment external to, surrounding, or internal to the vehicle 202. The filter can be a hardware component included with the visual sensor 214 or to lens of the visual sensor 214. The filter can also be a software component or include software that processes the image received from the visual sensor 214. The visual sensor 214, with or without a filter can be used together with a laser 261.

The laser 261 can include implemented in many ways. For example, the laser 261 can be implemented with a semiconductor technology or optics technology. The laser 261 can be capable of generating and projecting a light pattern. The laser 261 can project the light pattern to aid the travel of the vehicle 202.

The radar sensor 216 can include an object-detection system, device, or circuit. The radar sensor 216 can determine or identify an existence of an object or a target, such as an obstacle or another vehicle, external to the vehicle 202 a relative location or a distance between the object or the target and the vehicle 202, or a combination thereof.

The radar sensor 216 can utilize radio waves, sounds waves, or light emissions, as examples, to determine or identify an existence of the object or the target, the relative location or a distance from the vehicle 202, or a combination thereof. For example, the radar sensor 216 can include a proximity sensor or warning system, such as for an area in front of, behind, adjacent to or on a side of, or a combination thereof geographically or physically relative to the vehicle 202.

The accessory sensor 218 can include a device for determining or detecting a status of a subsystem or a feature of the vehicle 202. For example, the accessory sensor 218 can determine or detect the status or a setting for windshield wipers, turn signals, gear setting, headlights, or a combination thereof.

The volume sensor 220 can include a device for detecting or determining sounds for the vehicle 202. For example, the volume sensor 220 can include a microphone for detecting or determining sounds within a cabin of the vehicle 202. Also for example, the volume sensor 220 can further include a circuit for detecting or determining a volume level or an output level of speakers within the vehicle 202. Further for example, the volume sensor 220 can detect and determine the sounds relating to the sounds external to the vehicle 202.

The vehicle 202 can use one or more of the environmental sensors 210 to generate the on-board diagnostics 222 describing or representing information regarding the environment within or surrounding the vehicle 202. The on-board diagnostics 222 can be further processed with the vehicle control circuit 206, stored in the vehicle storage circuit 208, communicated to another device through the vehicle control circuit 206, or a combination thereof.

The vehicle 202 can further include a user device or a mobile device illustrated in FIG. 1. For example, the vehicle 202 can include the first device 102.

As a more specific example, the vehicle communication circuit 204, the vehicle control circuit 206, the vehicle storage circuit 208, the environmental sensors 210, one or more interfaces, or a combination thereof can be included in or make up the first device 102 included in or integral with the vehicle 202. Also as a more specific example, the vehicle 202 can include or be integral with the first device 102 including an embedded compute system, an infotainment system, a smart driving or a driver assistance system, a self-driving or a maneuvering system for the vehicle 202, or a combination thereof.

The vehicle 202 can include a front portion 257, a rear portion 255, and a side portion 253 or a combination thereof. The front portion 257 can be opposite to the rear portion 255. For clarity and as an example, the front portion 257, the rear portion 255, and the side portion 253 are labeled in FIG. 2 relative to the vehicle 202. As examples, the front portion 257, the rear portion 255, and the side portion 253 are labeled in FIG. 2 with a dashed outline to provide the respective portion of the vehicle 202 that can be viewed with respective to the embodiment.

The side portion 253 can include one end that is adjacent to the front portion 257, and can include an opposite end that is adjacent to the rear portion 255. The side portion 253 is not considered the front portion 257 nor the rear portion 255. The front portion 257 is the portion that is facing the direction as the movement of the vehicle 202 when in "drive" mode, not "reverse" mode. The rear portion 255 portion that is facing the opposite direction from the movement of the vehicle 202.

The vehicle 202 can include a vehicle display 259. The vehicle display 259 can present an image, an alphanumeric character, a sound, a video, or a combination thereof. The vehicle display 259 can be implemented in a number of ways with hardware, software, or a combination thereof. For example, the vehicle display 259 can be a monitor or a screen, such as the first device 102 as a smart phone or a heads-up display (HUD). The vehicle display 259 can be a display for the vehicle telematics or infotainment system.

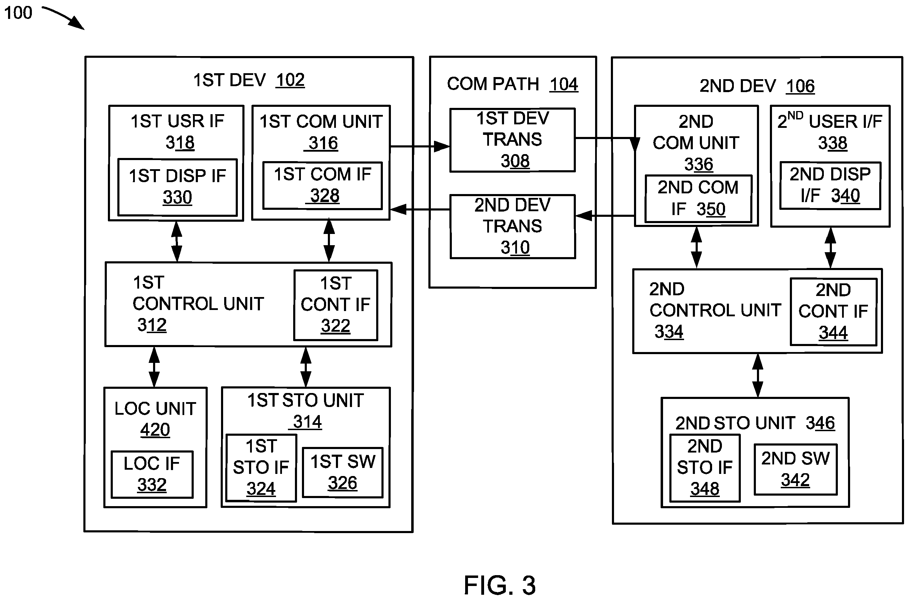

Referring now to FIG. 3, therein is shown an example of a block diagram of the vehicle system 100. The vehicle system 100 can include the first device 102, the communication path 104, and the second device 106. The first device 102 can send information in a first device transmission 308 over the communication path 104 to the second device 106. The second device 106 can send information in a second device transmission 310 of FIG. 3 over the communication path 104 to the first device 102.

For illustrative purposes, the vehicle system 100 is shown with the first device 102 as a client device, although it is understood that the vehicle system 100 can include the first device 102 as a different type of device. For example, the first device 102 can be a server including a display interface. Also for example, the first device 102 can represent the vehicle 202 of FIG. 2.

Also for illustrative purposes, the vehicle system 100 is shown with the second device 106 as a server, although it is understood that the vehicle system 100 can include the second device 106 as a different type of device. For example, the second device 106 can be a client device. Also for example, the second device 106 can represent the vehicle 202.

Further for illustrative purposes, the vehicle system 100 is shown with interaction between the first device 102 and the second device 106, although it is understood that the first device 102 can similarly interact another instance of the first device 102. Similarly, the second device 106 can similarly interact with another instance of the second device 106.

For brevity of description in this embodiment of the present invention, the first device 102 will be described as a client device and the second device 106 will be described as a server device. The embodiment of the present invention is not limited to this selection for the type of devices. The selection is an example of an embodiment of the present invention.

The first device 102 can include a first control circuit 312, a first storage circuit 314, a first communication circuit 316, and a first user interface 318, and a first location circuit 320. The first control circuit 312 can include a first control interface 322. The first control circuit 312 can execute a first software 326 to provide the intelligence of the vehicle system 100.

The circuits in the first device 102 can be the circuits discussed in the vehicle 202. For example, the first control circuit 312 can represent the vehicle control circuit 206 of FIG. 2 or vice versa. Also for example, the first storage circuit 314 can represent the vehicle storage circuit 208 of FIG. 2 or vice versa. Further, for example, the first communication circuit 316 can represent the vehicle communication circuit 204 of FIG. 2 or vice versa.

The first control circuit 312 can be implemented in a number of different manners. For example, the first control circuit 312 can be a processor, an application specific integrated circuit (ASIC) an embedded processor, a microprocessor, a hardware control logic, a hardware finite state machine (FSM), a digital signal processor (DSP), or a combination thereof. The first control interface 322 can be used for communication between the first control circuit 312 and other functional units or circuits in the first device 102. The first control interface 322 can also be used for communication that is external to the first device 102.

The first control interface 322 can receive information from the other functional units/circuits or from external sources, or can transmit information to the other functional units/circuits or to external destinations. The external sources and the external destinations refer to sources and destinations external to the first device 102.

The first control interface 322 can be implemented in different ways and can include different implementations depending on which functional units/circuits or external units/circuits are being interfaced with the first control interface 322. For example, the first control interface 322 can be implemented with a pressure sensor, an inertial sensor, a microelectromechanical system (MEMS), optical circuitry, waveguides, wireless circuitry, wireline circuitry, or a combination thereof.

The first storage circuit 314 can store the first software 326. The first storage circuit 314 can also store the relevant information, such as data representing incoming images, data representing previously presented image, sound files, or a combination thereof.

The first storage circuit 314 can be a volatile memory, a nonvolatile memory, an internal memory, an external memory, or a combination thereof. For example, the first storage circuit 314 can be a nonvolatile storage such as non-volatile random access memory (NVRAM), Flash memory, disk storage, or a volatile storage such as static random access memory (SRAM).

The first storage circuit 314 can include a first storage interface 324. The first storage interface 324 can be used for communication between the first storage circuit 314 and other functional units or circuits in the first device 102. The first storage interface 324 can also be used for communication that is external to the first device 102.

The first storage interface 324 can receive information from the other functional units/circuits or from external sources, or can transmit information to the other functional units/circuits or to external destinations. The external sources and the external destinations refer to sources and destinations external to the first device 102.

The first storage interface 324 can include different implementations depending on which functional units/circuits or external units/circuits are being interfaced with the first storage circuit 314. The first storage interface 324 can be implemented with technologies and techniques similar to the implementation of the first control interface 322.

The first communication circuit 316 can enable external communication to and from the first device 102. For example, the first communication circuit 316 can permit the first device 102 to communicate with the second device 106 of FIG. 1, an attachment, such as a peripheral device or a desktop computer, and the communication path 104.

The first communication circuit 316 can also function as a communication hub allowing the first device 102 to function as part of the communication path 104 and not limited to be an end point or terminal circuit to the communication path 104. The first communication circuit 316 can include active and passive components, such as microelectronics or an antenna, for interaction with the communication path 104.

The first communication circuit 316 can include a first communication interface 328. The first communication interface 328 can be used for communication between the first communication circuit 316 and other functional units or circuits in the first device 102. The first communication interface 328 can receive information from the other functional units/circuits or can transmit information to the other functional units or circuits.

The first communication interface 328 can include different implementations depending on which functional units or circuits are being interfaced with the first communication circuit 316. The first communication interface 328 can be implemented with technologies and techniques similar to the implementation of the first control interface 322.

The first user interface 318 allows a user (not shown) to interface and interact with the first device 102. The first user interface 318 can include an input device and an output device. Examples of the input device of the first user interface 318 can include a keypad, a touchpad, soft-keys, a keyboard, a microphone, an infrared sensor for receiving remote signals, or any combination thereof to provide data and communication inputs.

The first user interface 318 can include a first display interface 330. The first display interface 330 can include an output device. The first display interface 330 can include a display, a projector, a video screen, a speaker, or any combination thereof.

The first control circuit 312 can operate the first user interface 318 to display information generated by the vehicle system 100. The first control circuit 312 can also execute the first software 326 for the other functions of the vehicle system 100, including receiving location information from the first location circuit 320. The first location circuit 320 can also be or function as the location-movement sensor 212 of FIG. 2. The first control circuit 312 can further execute the first software 326 for interaction with the communication path 104 via the first communication circuit 316.

The first location circuit 320 can generate location information, current heading, current acceleration, and current speed of the first device 102, as examples. The first location circuit 320 can be implemented in many ways. For example, the first location circuit 320 can function as at least a part of the global positioning system, an inertial compute system, a cellular-tower location system, a pressure location system, or any combination thereof. Also, for example, the first location circuit 320 can utilize components such as an accelerometer or global positioning system (GPS) receiver.

The first location circuit 320 can include a first location interface 332. The first location interface 332 can be used for communication between the first location circuit 320 and other functional units or circuits in the first device 102. The first location interface 332 can also be used for communication external to the first device 102.

The first location interface 332 can receive information from the other functional units/circuits or from external sources, or can transmit information to the other functional units/circuits or to external destinations. The external sources and the external destinations refer to sources and destinations external to the first device 102.

The first location interface 332 can include different implementations depending on which functional units/circuits or external units/circuits are being interfaced with the first location circuit 320. The first location interface 332 can be implemented with technologies and techniques similar to the implementation of the first control circuit 312.

The second device 106 can be optimized for implementing an embodiment of the present invention in a multiple device embodiment with the first device 102. The second device 106 can provide the additional or higher performance processing power compared to the first device 102. The second device 106 can include a second control circuit 334, a second communication circuit 336, a second user interface 338, and a second storage circuit 346.

The second user interface 338 allows a user (not shown) to interface and interact with the second device 106. The second user interface 338 can include an input device and an output device. Examples of the input device of the second user interface 338 can include a keypad, a touchpad, soft-keys, a keyboard, a microphone, or any combination thereof to provide data and communication inputs. Examples of the output device of the second user interface 338 can include a second display interface 340 of FIG. 3. The second display interface 340 can include a display, a projector, a video screen, a speaker, or any combination thereof.

The second control circuit 334 can execute a second software 342 of FIG. 3 to provide the intelligence of the second device 106 of the vehicle system 100. The second software 342 can operate in conjunction with the first software 326. The second control circuit 334 can provide additional performance compared to the first control circuit 312.

The second control circuit 334 can operate the second user interface 338 to display information. The second control circuit 334 can also execute the second software 342 for the other functions of the vehicle system 100, including operating the second communication circuit 336 to communicate with the first device 102 over the communication path 104.

The second control circuit 334 can be implemented in a number of different manners. For example, the second control circuit 334 can be a processor, an embedded processor, a microprocessor, hardware control logic, a hardware finite state machine (FSM), a digital signal processor (DSP), or a combination thereof.

The second control circuit 334 can include a second control interface 344 of FIG. 3. The second control interface 344 can be used for communication between the second control circuit 334 and other functional units or circuits in the second device 106. The second control interface 344 can also be used for communication that is external to the second device 106.

The second control interface 344 can receive information from the other functional units/circuits or from external sources, or can transmit information to the other functional units/circuits or to external destinations. The external sources and the external destinations refer to sources and destinations external to the second device 106.

The second control interface 344 can be implemented in different ways and can include different implementations depending on which functional units/circuits or external units/circuits are being interfaced with the second control interface 344. For example, the second control interface 344 can be implemented with a pressure sensor, an inertial sensor, a microelectromechanical system (MEMS), optical circuitry, waveguides, wireless circuitry, wireline circuitry, or a combination thereof.

The second storage circuit 346 can store the second software 342. The second storage circuit 346 can also store the information such as data representing incoming images, data representing previously presented image, sound files, or a combination thereof.. The second storage circuit 346 can be sized to provide the additional storage capacity to supplement the first storage circuit 314.

For illustrative purposes, the second storage circuit 346 is shown as a single element, although it is understood that the second storage circuit 346 can be a distribution of storage elements. Also for illustrative purposes, the vehicle system 100 is shown with the second storage circuit 346 as a single hierarchy storage system, although it is understood that the vehicle system 100 can include the second storage circuit 346 in a different configuration. For example, the second storage circuit 346 can be formed with different storage technologies forming a memory hierarchal system including different levels of caching, main memory, rotating media, or off-line storage.

The second storage circuit 346 can be a volatile memory, a nonvolatile memory, an internal memory, an external memory, or a combination thereof. For example, the second storage circuit 346 can be a nonvolatile storage such as non-volatile random access memory (NVRAM), Flash memory, disk storage, or a volatile storage such as static random access memory (SRAM).

The second storage circuit 346 can include a second storage interface 348. The second storage interface 348 can be used for communication between the second storage circuit 346 and other functional units or circuits in the second device 106. The second storage interface 348 can also be used for communication that is external to the second device 106.

The second storage interface 348 can receive information from the other functional units/circuits or from external sources, or can transmit information to the other functional units/circuits or to external destinations. The external sources and the external destinations refer to sources and destinations external to the second device 106.

The second storage interface 348 can include different implementations depending on which functional units/circuits or external units/circuits are being interfaced with the second storage circuit 346. The second storage interface 348 can be implemented with technologies and techniques similar to the implementation of the second control interface 344.

The second communication circuit 336 can enable external communication to and from the second device 106. For example, the second communication circuit 336 can permit the second device 106 to communicate with the first device 102 over the communication path 104.

The second communication circuit 336 can also function as a communication hub allowing the second device 106 to function as part of the communication path 104 and not limited to be an end point or terminal unit or circuit to the communication path 104. The second communication circuit 336 can include active and passive components, such as microelectronics or an antenna, for interaction with the communication path 104.

The second communication circuit 336 can include a second communication interface 350. The second communication interface 350 can be used for communication between the second communication circuit 336 and other functional units or circuits in the second device 106. The second communication interface 350 can receive information from the other functional units/circuits or can transmit information to the other functional units or circuits.

The second communication interface 350 can include different implementations depending on which functional units or circuits are being interfaced with the second communication circuit 336. The second communication interface 350 can be implemented with technologies and techniques similar to the implementation of the second control interface 344.

The first communication circuit 316 can couple with the communication path 104 to send information to the second device 106 in the first device transmission 308. The second device 106 can receive information in the second communication circuit 336 from the first device transmission 308 of the communication path 104.

The second communication circuit 336 can couple with the communication path 104 to send information to the first device 102 in the second device transmission 310. The first device 102 can receive information in the first communication circuit 316 from the second device transmission 310 of the communication path 104. The vehicle system 100 can be executed by the first control circuit 312, the second control circuit 334, or a combination thereof. For illustrative purposes, the second device 106 is shown with the partition containing the second user interface 338, the second storage circuit 346, the second control circuit 334, and the second communication circuit 336, although it is understood that the second device 106 can include a different partition. For example, the second software 342 can be partitioned differently such that some or all of its function can be in the second control circuit 334 and the second communication circuit 336. Also, the second device 106 can include other functional units or circuits not shown in FIG. 3 for clarity.

The functional units or circuits in the first device 102 can work individually and independently of the other functional units or circuits. The first device 102 can work individually and independently from the second device 106 and the communication path 104.

The functional units or circuits in the second device 106 can work individually and independently of the other functional units or circuits. The second device 106 can work individually and independently from the first device 102 and the communication path 104.

The functional units or circuits described above can be implemented in hardware. For example, one or more of the functional units or circuits can be implemented using the a gate, circuitry, a processor, a computer, integrated circuit, integrated circuit cores, a pressure sensor, an inertial sensor, a microelectromechanical system (MEMS), a passive device, a physical non-transitory memory medium containing instructions for performing the software function, a portion therein, or a combination thereof.

For illustrative purposes, the vehicle system 100 is described by operation of the first device 102 and the second device 106. It is understood that the first device 102 and the second device 106 can operate any of the modules and functions of the vehicle system 100.

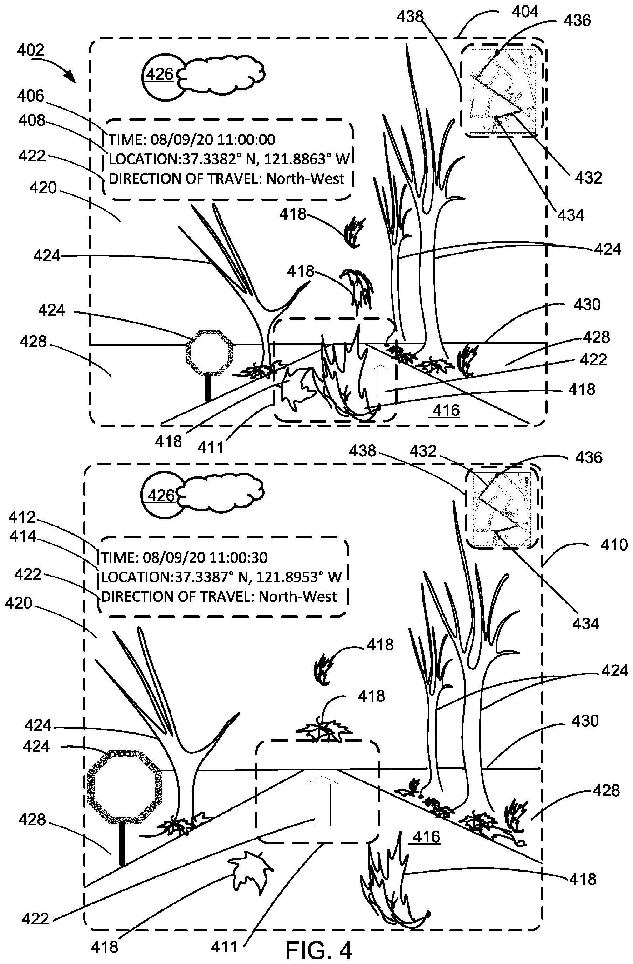

Referring now to FIG. 4, therein is shown an example of displays of a travel path 432 of the vehicle system 100 of FIG. 1. The example shown in FIG. 4 represent images 402 along the travel path 432 for the vehicle system 100, the first device 102 of FIG. 1, the second device 106 of FIG. 1, the vehicle 202 of FIG. 2, or a combination thereof. In this example, the images 402 represents the travel path 432 along a street along a residential neighborhood. As a specific example, the display can be shown on the first display interface 330 of FIG. 3, the second display interface 340 of FIG. 3, the vehicle display 259 of FIG. 2, or a combination thereof. For brevity, the description of embodiments is described with the vehicle 202, although it is understood that the description is not intended to be limited to the vehicle 202 and can apply to the first device 102 and the second device 106 as well as other embodiments not explicitly described.

The travel path 432 is a route taken by the vehicle 202 from a start position 434 to an end position 436. The starting point 434 can be at a physical location and represents the initial point at which the travel path 432 begins or a waypoint along the travel path 432. The starting point 434 can be to provide an initial location or a location where travel resumes for the travel path 432. The end position 436 can be a physical location and can represent the point at which the travel path 432 ends or a waypoint along the travel path. The end position 436 can be to represent an intermediate stop, a terminal location, or a combination thereof of the travel path 432. The waypoint can also represent an intermediate stop as well.

The travel path 432 can be for a free-drive mode without a predetermined route or can be included as part of a navigation route where the starting point 434 and the end position 436 is known by the vehicle system 100 and navigation guidance can be provided. For example, the end position 436 can be an intermediate destination, a final destination, or a combination thereof. The travel path 432 can include a traversal path 416, a non-traversal path 428, or a combination thereof.

The travel path 432 can be depicted on a map 438. The map 438 can include a graphical representation of the travel path 432, also showing the start position 434, the end position 436, or a combination thereof. The map 438 can depict a portion of the travel path 432, the entire span of the travel path 432, or a combination thereof. The map 438 can include, for example, a graphical representation, a list of location points, landmarks, street information, or a combination thereof.

The example shown in FIG. 4 depicts the images 402 including a current image 410 and a previous image 404 shown above the current image 410. The current image 410 represents a view along the travel path 432 of the vehicle 202 at a current time 412 from a current location 414. The current image 410 can include information, representation, or a combination for the traversal path 416, the non-traversal path 428, or a combination thereof along a travel direction 422. The current image 410 can also include information, representation, or a combination thereof related to a medium 420, a moving solid object 418, a clear path 411, a stationary solid object 424, a weather condition 426, and a horizon 430.

The previous image 404 represents a view along the travel path 432 of the vehicle 202 at a previous time 406 from a previous location 408. The previous image 404 can include the traversal path 416, the non-traversal path 428, the previous time 406, the previous location 408, a travel direction 422, the clear path 411, the medium 420, the moving solid object 418, the stationary solid object 424, the weather condition 426, and the horizon 430.

The traversal path 416 can represent a drivable area of the travel path 432 along the travel direction 422 for the vehicle 202. For example, the traversal path 416 can include a road, a pathway, a course, an expressway, a highway, a lane, a portion of a parking lot, a roadway, a street, a route, a track, a trail, a byway, or a combination thereof.

The non-traversal path 428 is an area that is not part of the traversal path 416. The non-traversal path 428 can include an area adjacent to the traversal path 416. As examples, the non-traversal path 428 can include a sidewalk, a curb, a footpath, a walkway, a ditch, a portion of the traversal path 416 intended for other functions such as parking, cycling, walking, or a combination thereof.

As an example, the current image 410 can be an image that is captured by the visual sensor 214 of FIG. 2. The current image 410 is captured at the current time 412 and the current location 414. FIG. 4 can depict, for example, the current image 410 including representations for the current time 412 and the current location 414. The current time 412 and the current location 414 can be captured by the visual sensor 214 as part of the current image 410.

The current time 412 represents a time demarcation associated with when the current image 410 was captured. For example, the current time 412 can include a timestamp with a date/hour/minute/second format. Also for example, the current time 412 can be represented differently, such as by military time, standard time, other methods of determining time, date, or a combination thereof.

The current location 414 represents a physical location of the vehicle 202 associated with when the current image 410 was captured. The current location 414 can be represented and captured in a number of ways. For example, the current location 414 can be represented based on a global positioning system (GPS), a relative positioning, cellular triangulation, Wi-Fi triangulation, dead-reckoning, or a combination thereof. As examples, the current location 414 can be captured by the location-movement sensor 212 of FIG. 2, the first location circuit 320 of FIG. 3, or a combination thereof.

The previous image 404 can be an image that is captured by the visual sensor 214 at a time in the past relative to the time the current image 410 is captured. The previous image 404 is captured at the previous time 406, and the previous location 408.

The previous time 406 and the previous location 408 can be captured by the visual sensor 214 as part of the previous image 404. Also for example, the previous image 404 can be associated with the previous time 406, and previous location 408 and without being displayed. The previous time 406 represents a time demarcation associated with the time when the previous image 404 was captured. For example, the previous time 406 can include a timestamp with a date/hour/minute/second format. Also for example, the previous time 406 can be represented differently, such as by military time, standard time, other methods of determining time, date, or a combination thereof.

The previous location 408 represents a physical location of the vehicle 202 associated with when the previous image 404 was captured. The previous location 408 can be represented and captured in a number of ways. For example, the previous location 408 can be represented based on a global positioning system (GPS), a relative positioning, cellular triangulation, Wi-Fi triangulation, dead-reckoning, or a combination thereof. As examples, the previous location 408 can be captured by the location-movement sensor 212, the first location circuit 320, or a combination thereof.

The travel direction 422 indicates the direction of, or a potential direction of motion of the vehicle 202 along the travel path 432. The travel direction 422 can be to provide an orientation of the vehicle 202 over the traversal path 416. The travel direction 422 can help in locating an unobstructed route along the travel path 432. For example, the travel direction 422 can be described along the travel path 432. In FIG. 4 the travel direction 422 is towards the horizon 430. The horizon 430 can be represented by the line or demarcation at which the earth's surface, represented in FIG. 4 by the traversal path 416, and the non-traversal path 428, and the sky appear to meet. The travel direction 422 can be in any in a direction of the vehicle 202 along the travel path 432, not along the travel path 432, or a combination thereof.

The medium 420 can include a fluid, non-fluid, or combination thereof through which travel, motion, non-motion, non-travel or a combination thereof occurs. The medium 420 can provide indications of the clear path 411. For example, the medium 420 can include air, water, space, vacuum, gas, or a combination thereof. In the example shown in FIG. 4, the medium 420 can include air and can surround the objects depicted in the current image 410, the previous image 404, or a combination thereof.

In the example shown in FIG.4, the current image 410 and the previous image 404 depict multiple instances of the moving solid object 418. The moving solid object 418 can include a material entity that is firm and can change position. As examples, the previous image 404 depicts a number of instances of the moving solid object 418 as falling leaves suspended in the medium 420 as air. The moving solid object 418 can be within the traversal path 416 or within the non-traversal path 428.

The clear path 411 can be along the travel path 432. The clear path 411 can include an open space within the traversal path 416, the non-traversal path 428 or a combination thereof. The clear path 411 can allow for the vehicle 202 to travel unimpeded, or without an adverse collision. The clear path 411 can be along the travel path 432. For example, the clear path 411 can describe an area starting from in-front of the vehicle 202 in the travel direction 422. The clear path 411 allows the vehicle 202 to move in the travel direction 422 without the occurrence of an adverse collision.

In the previous image 404, some of the falling leaves are in the traversal path 416 of the travel direction 422. In the previous image 404, some of the falling leaves are falling in the traversal path 416. In the current image 410, the leaves have moved. The leaves falling in the previous image 404 at the previous time 406 do not appear to show the clear path 411 along the traversal path 416. However at the current time 412, the current image 410 depicts the leaves have moved and the clear path 411 appears with a traversal path 416 that is unimpeded.

Also as example shown in FIG. 4, the previous image 404 and the current image 410 depict multiple instances of the stationary solid object 424. The stationary solid object 424 is a non-moving item within the previous image 404, the current image 410, or a combination thereof. The stationary solid object 424 can include a material entity that is firm and does not generally change position. The stationary solid object 424 can be positioned along either the traversal path 416, the non-traversal path 428, or a combination thereof. As examples, the previous image 404 and the current image 410 depict a number of instances of the stationary solid object 424. As specific examples, the previous image 404 and the current image 410 depict a street sign and trees in the non-traversal path 428.

In FIG. 4, in the current image 410 and the previous image 404, the weather condition 426 is captured with the environmental sensor 210 of FIG. 2. The weather condition 426 can represent the atmospheric conditions that include the state of the atmosphere in terms of temperature, atmospheric pressure, wind, humidity, precipitation, cloudiness, or a combination thereof. For example, the weather condition 426 and the current time 412 can be used by the vehicle system 100 to determine a season such as fall, summer, spring, or winter. The weather condition 426 can be used by the vehicle system 100 to determine that the moving solid object 418 is falling leaves that are swirling in the medium 420 which is given as an example of air.

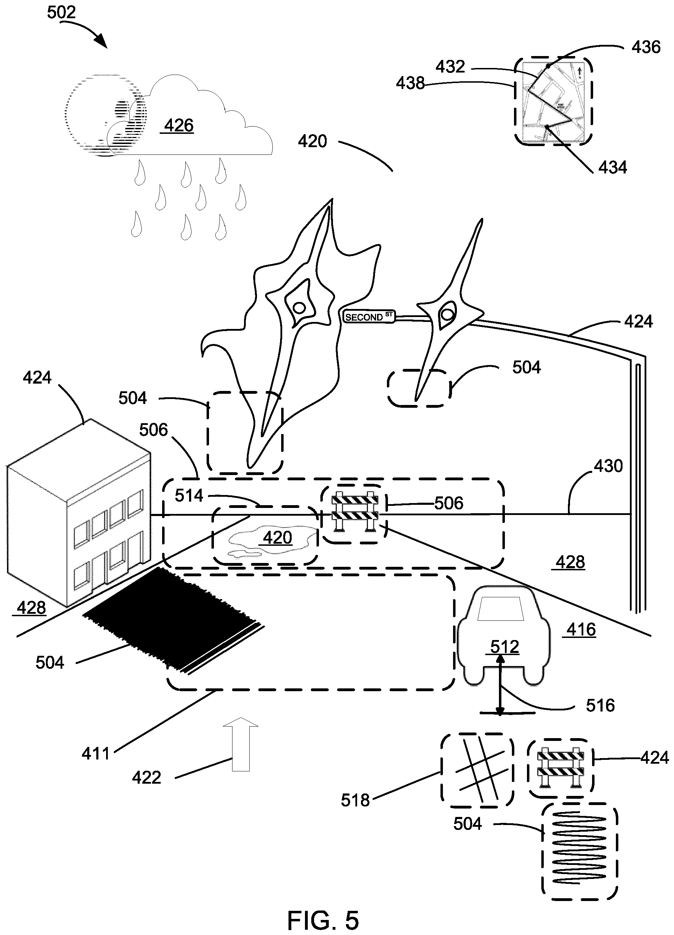

Referring now to FIG. 5, therein is shown an example of a further display along the travel path 432 of the vehicle system 100 of FIG. 1. The example of the display can be shown on or in the first device 102 of FIG. 1, the second device 106 of FIG. 1, the vehicle 202 of FIG. 2, or a combination thereof. As a specific example, the display can be shown on the first display interface 330 of FIG. 3, the second display interface 340 of FIG. 3, the vehicle display 259 of FIG. 2, or a combination thereof. For brevity, the description of embodiments is described with the vehicle 202, although it is understood that the description is not intended to be limited to the vehicle 202 and can apply to the first device 102 and the second device 106 as well as other embodiments not explicitly described.

The example shown in FIG. 5 depicts a third image 502 depicting a view along the travel path 432 as the vehicle system 100 of FIG. 1 including the traversal path 416. For example, the third image 502 can represent one of the images 402 of IFG. 4. Also for example, the third image 502 can also represent the current image 410 of FIG. 4. Further for example, the third image 502 can further represent the previous image 404 of FIG. 4. For brevity, the third image 502 is described without specific reference to represent the current image 410 or the previous image 404, although it is understood that the third image 502 can be either or one of the images 402.

The third image 502 can assist to determine the clear path 411. For example, the third image 502 can depict the traversal path 416, the non-traversal path 428, the medium 420, the moving solid object 418, the stationary solid object 424, the weather condition 426, the horizon 430, the clear path 411, a detected feature 504, the travel direction 422, an obstruction 512, a non-obstruction 514, the travel path 432, the map 438, the start position 434, the end position 436, and an image category 506.

The image category 506 can include a class or division with common attributes based on the detected feature 504 of the third image 502 or part of the third image 502. For example, the third image 502 can include one instance of the image category 506, multiple instances of the image category 506, or a combination thereof based on the detected feature 504 of the third image 502, the part of third image 502, or a combination thereof.

In the third image 502, there are examples of the image category 506 depicted. Examples of the image category 506 can be the obstruction 512, the non-obstruction 514, the medium 420, or a combination thereof. The obstruction 512 can impede movement along the traversal path 416. As examples, the obstruction 512 can be the moving solid object 418, the stationary solid object 424, or a combination thereof located along the traversal path 416. The non-obstruction 514 can be an object that does not impede movement, travel, or a combination thereof along the traversal path 416. For example, the non-obstruction 514 can be the leaves swirling in the air as depicted in FIG. 4 in the medium 420 or a small puddle of rainwater as depicted in FIG. 5. In this example, the leaves swirling care moving solid object 418 but are still items that are non-obstruction 514. The medium 420, for example, can be air, water vapor, water, vacuum, space, gas, or a combination thereof.

Also an example, the image category 506 can be generated based on the detected feature 504. The detected feature 504 can indicate information in the third image 502 as the obstruction 512, the non-obstruction 514, the clear path 411, the medium 420, the moving solid object 418, the stationary solid object 424, or a combination thereof.

The detected feature 504 can be an object in the third image 502. For example, the detected feature 504 can help to determine objects along the traversal path 416. In another example, the detected feature 504 can help to determine the clear path 411. The detected feature 504 is illustrated in FIG. 5 through various examples, such as a reflection of a building and a reflection from a stop light on a wet pavement during a moonlit night. The detected feature 504 can indicate that absence of the moving solid object 418, absence of the stationary solid object 424, or a combination thereof. The detected feature 504 can indirectly indicate a presence of the medium 420, such as air, water, or a combination thereof. The detected feature 504 can be used to determine the clear path 411 based on the image category 506 of part of the third image 502 to be the non-obstruction 514 with the medium 420.

In another example, a laser pattern 518 can be projected by the vehicle 202 on the traversal path 416 using the laser 261 of FIG. 2. The interference of the laser pattern with the medium 420, the moving solid object 418, the stationary solid object 424, or a combination thereof can cause light scattering. In the third image 502, a depiction of the light scattering can be captured by the visual sensor 214. The image captured by the visual sensor 214 of the light scattering is an example of the detected feature 504. The detected feature 504 can be depicted in the third image 502 and used by the vehicle system 100 to generate the image category 506.

The clear path 411 include a part along the traversal path 416 that allows for the vehicle 202 to travel unimpeded or without an adverse collision. The clear path 411 depicted in the third image 502 can be generated based on the detected feature 504 and the image category 506. For example, the vehicle system 100 can determine that the traversal path 416 has the clear path 411 based on the third image 502 depicting only the medium 420 along the travel direction 422 of FIG. 4 for the traversal path 416.

The clear path 411 can include a distance 516 from the vehicle 202 along the travel direction 422. The distance 516 represents a physical value for spacing between objects. For example, the distance 516 is the length from the vehicle 202, the radar sensor 216 of FIG. 2, or a combination thereof to the moving solid object 418, the obstruction 512, the stationary solid object 424, the non-obstruction 514, or a combination thereof. Also for example, the distance 512 can be determined based on one or more instances of the detected feature 504. The example in FIG. 5 can depict the distance 516 to the obstruction 512 along the traversal path 416 of the travel path 432.

In another example, the vehicle system 100 can determine the clear path 411 with a determination of an instance of the detected feature 504, the image category 506, or a combination thereof, along the traversal path 416 being determined as the non-obstruction 514, such as the stationary solid object 424. In a further example, the vehicle system 100 can determine the clear path 411 with a determination of an instance of the detected feature 504, the image category 506, or a combination thereof along the traversal path 416 being determined as the medium 420, the absence of the obstruction 512, or a combination thereof.

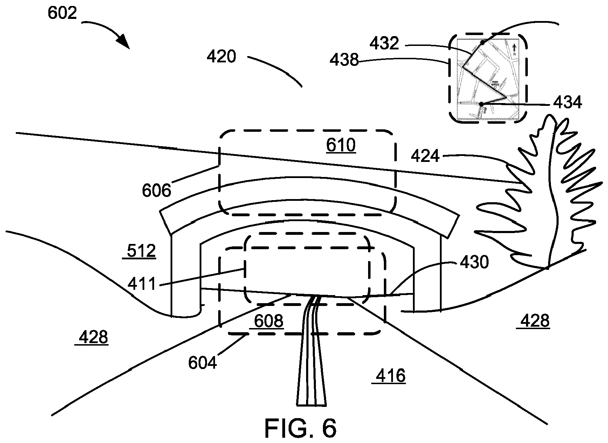

Referring now to FIG. 6, therein is shown an example of a yet a further display of the travel path 432 for the vehicle system 100 of FIG. 1. The example of the display can be shown on or in the first device 102 of FIG. 1, the second device 106 of FIG. 1, the vehicle 202 of FIG. 2, or a combination thereof. As a specific example, the display can be shown on the first display interface 330 of FIG. 3, the second display interface 340 of FIG. 3, the vehicle display 259 of FIG. 2, or a combination thereof. For brevity, the description of embodiments is described with the vehicle 202, although it is understood that the description is not intended to be limited to the vehicle 202 and can apply to the first device 102 and the second device 106 as well as other embodiments not explicitly described.

The example shown in FIG. 6 depicts a fourth image 602 depicting a view along the travel path 432 as the vehicle system 100 of FIG. 1 including the traversal path 416. For example, the fourth image 602 can represent one of the images 402 of IFG. 4. Also for example, the fourth image 602 can also represent the current image 410 of FIG. 4. Further for example, the fourth image 602 can further represent the previous image 404 of FIG. 4. For brevity, the fourth image 602 is described without specific reference to represent the current image 410 or the previous image 404, although it is understood that the fourth image 602 can be either or one of the images 402.

The fourth image 602 illustrates an example of the vehicle system 100 of FIG. 1, the vehicle 202, or a combination thereof along the traversal path 416 approaching an overhead bridge. The overhead bridge has a portion, such as the underpass, that is the clear path 411 and a portion that is the obstruction 512. The fourth image 602 illustrates, for example, the traversal path 416, the non-traversal path 428, the medium 420, the horizon 430, the stationary solid object 424, the clear path 411, the obstruction 512, the travel path 432, the map 438, the start position 434, and the end position 436. The fourth image 602 can include a first portion 604 and a second portion 606.

A first image category 608 can represent the image category 506 of FIG. 5 for the first portion 604. A second image category 610 can represent the image category 506 for the second portion 606.

The first portion 604 can be located anywhere on the fourth image 602 and can include any dimensions or can be represented by various shapes. For example in FIG. 6, the first portion 604 can covered by an elliptical shape, a rectangular shape, a trapezoid shape, a two-dimensional shape, a three-dimensional shape, or a combination thereof. Similarly, the first portion 604 can represent a part of the current image 410, the previous image 404, the images 402, the third image 502 of FIG. 5, or a combination thereof.

The second portion 606 can be located anywhere on the fourth image 602. As examples, the second portion 606 can be mutually exclusive relative to or overlap with the first portion 604. The second portion 606 can include any dimensions or can be represented by various shapes. For example in FIG. 6, the second portion 606 can be covered by an elliptical shape, a rectangular shape, a trapezoid shape, a two-dimensional shape, a three-dimensional shape, or a combination thereof. Similarly, the second portion 606 can represent a part of the current image 410, the previous image 404, the images 402, the third image 502, or a combination thereof.

As an example shown in FIG. 6, the vehicle 202 of FIG. 2 can travel along the traversal path 416. In an example to determine the clear path 411, the fourth image 602 can be partitioned into the first portion 604, and the second portion 606. The first portion 604 can include all, a part of, or a combination thereof of the clear path 411. The second portion 606 can include at least a part of an obstruction 512.

The image category 506 can be represented by the first image category 608 and the second image category 610. For example, the first image category 608 can be generated for the first portion 604. The second image category 610 can be generated for the second portion 606.

The first image category 608 can be a class or division including common attributes based on the detected feature 504 of FIG. 5 of the first portion 604. For example, the first portion 604 can be one type of the image category 506, more than one type of the image category 506, the first image category 608, or a combination thereof.

The second image category 610 can be a class or division including shared characteristics based on the detected feature 504 of the second portion 606. For example, the second portion 606 can include one type of the image category 506, more than one type of the image category 506, the second image category 610, or a combination thereof.

In this example as the vehicle 202 approaches the overhead bridge along the traversal path 416, the first image category 608, the second image category 610, or a combination thereof can determine if the vehicle 202 has the clear path 411 or can encounter the obstruction 512. To illustrate this as an example, the vehicle 202 can represent a small commuter car that has a height that fits below the underpass of the overhead bridge. Also as an example, the vehicle 202 can represent a large truck that is tall so that the top of the truck can encounter the overhead bridge or not fit underneath the underpass of the overhead bridge.

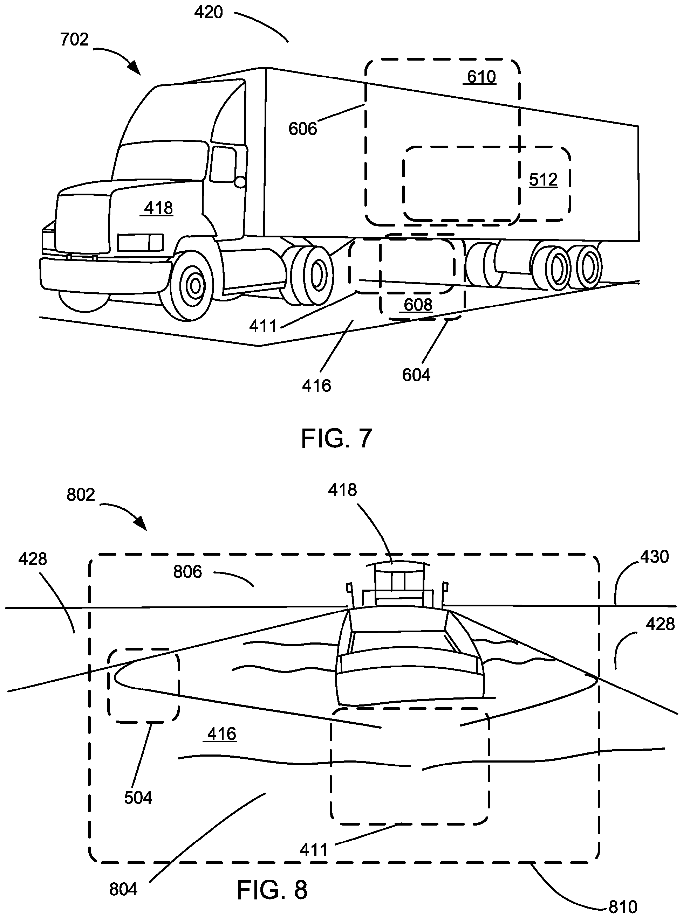

Referring now to FIG. 7, therein is shown an example of a display of the vehicle system 100 of FIG. 1 along the traversal path 416. The example of the display can be shown on or in the first device 102 of FIG. 1, the second device 106 of FIG. 1, the vehicle 202 of FIG. 2, or a combination thereof. As a specific example, the display can be shown on the first display interface 330 of FIG. 3, the second display interface 340 of FIG. 3, the vehicle display 259 of FIG. 2, or a combination thereof. For brevity, the description of embodiments is described with the vehicle 202, although it is understood that the description is not intended to be limited to the vehicle 202 and can apply to the first device 102 and the second device 106 as well as other embodiments not explicitly described.

The example shown in FIG. 7 depicts an example of the obstruction 512 along the travel path 416. In this example, FIG. 7 depicts a fifth image 702 for the traversal path 416. The fifth image 702 can also depict the traversal path 416, the medium 420, the moving solid object 418, the clear path 411, the obstruction 512, a first portion 604 of the fifth image 702, a second portion 606 of the fifth image 702, a first image category 608 of the first portion 604, and a second image category 610 of the second portion 606.

Fifth image 702 depicts the moving solid object 418 that can be a semi-tractor-trailer truck. The moving solid object 418 is on a traversal path 416. The fifth image 702 can include the first portion 604, and the second portion 606. The first portion 604 can include the first image category 608. The second portion 606 can include the second image category 610. As illustrated as an example in FIG. 7, the first portion 604 can contain only the medium 420 air and the first image category 608 can indicate there is a clear path 411 along the traversal path 416. The second portion 606 can contain an obstruction 512 and the second image category 610 can indicate that the clear path 411 is not available.

Referring now to FIG. 8, therein is shown an example of a display of the vehicle system 100 of FIG. 1 along the traversal path 416 in a further embodiment. The example of the display can be shown on or in the first device 102 of FIG. 1, the second device 106 of FIG. 1, the vehicle 202 of FIG. 2, or a combination thereof. As a specific example, the display can be shown on the first display interface 330 of FIG. 3, the second display interface 340 of FIG. 3, the vehicle display 259 of FIG. 2, or a combination thereof. For brevity, the description of embodiments is described with the vehicle 202, although it is understood that the description is not intended to be limited to the vehicle 202 and can apply to the first device 102 and the second device 106 as well as other embodiments not explicitly described.

The example shown in FIG. 8 depicts a sixth image 802 depicting a view along the travel path 432 as the vehicle system 100 of FIG. 1 including the traversal path 416. For example, the sixth image 802 can represent one of the images 402 of IFG. 4. Also for example, the sixth image 802 can also represent the current image 410 of FIG. 4. Further for example, the sixth image 802 can further represent the previous image 404 of FIG. 4. For brevity, the sixth image 802 is described without specific reference to represent the current image 410 or the previous image 404, although it is understood that the sixth image 802 can be either or one of the images 402.

The example shown in FIG. 8 depicts the sixth image 802 along the traversal path 416 that can include the traversal path 416, a first medium 804, a second medium 806, the moving solid object 418, the non-traversal path 428, the horizon 430, the clear path 411, a field of activity 810, and the detected feature 504.

FIG. 8 provides an example of a vehicle 100 of FIG. 1 as a boat that travels in water. In the example shown in FIG. 8, the medium 420 of FIG. 4 can include more than one type and represented as the first medium 804 and the second medium 806.

The first medium 804 can include a fluid, non-fluid, or combination thereof through which travel, motion, non-motion, non-travel or a combination thereof occurs. The first medium 804 can provide indications of the clear path 411. For example, the first medium 804 can be air, water, space, vacuum, gas, or a combination thereof. Air can generally exist as a gaseous mixture mainly of oxygen and nitrogen for example. Water can be liquid, gas or a combination thereof for example. In FIG. 8 the first medium 804 can include water. As a specific example, FIG. 8 depicts the first medium 804 as water or as a fluid.

The second medium 806 can include a fluid, non-fluid, or combination thereof through which travel, motion, non-motion, non-travel or a combination thereof occurs. The second medium 806 can provide indications of the clear path 411. For example, the second medium 806 can be air, water, space, vacuum, gas, or a combination thereof. As a specific example, FIG. 8 depicts the second medium 806 as air.

FIG. 8 further depicts an example of the field of activity 810 as shown in the sixth image 802. The field of activity 810 represents an area shown in the sixth image 802 where the clear path 411, the obstruction 512 of FIG. 5, the non-obstruction 514 of FIG. 5, or a combination thereof can be located. The field of activity 810 can also represent the area in-front of the vehicle system 100 that can include a collision, or other activity can occur.

FIG. 8 in sixth image 802 illustrates an example of a boat that can travel through the first medium 804 and through the traversal path 416. The detected feature 504 can include using the waves produced by the first medium 804 to find the image category 506 of FIG. 5.

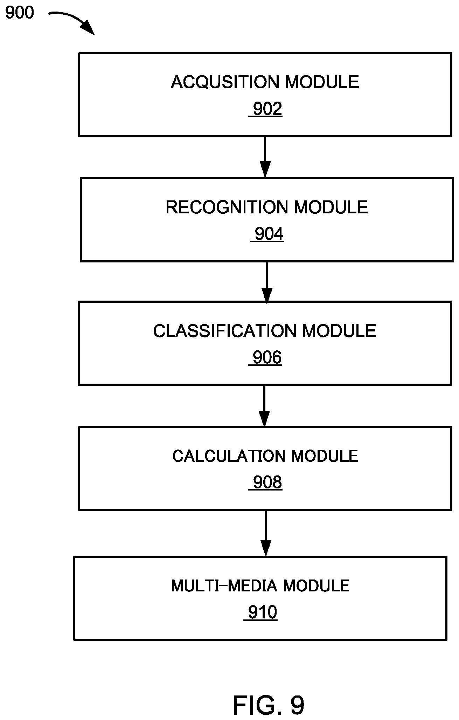

Referring now to FIG. 9, therein is shown an example of a control flow of the vehicle system 100 in an embodiment of the present invention. In this example, the vehicle system 100 can include an acquisition module 902, a recognition module 904, a classification module 906, a calculation module 908, a multi-media module 910, or a combination thereof.

The aforementioned modules can be included in the first software 326 of FIG. 3, the second software 342 of FIG. 3, or a combination thereof. The first software 326, the second software 342, or a combination thereof can be executed with the first control circuit 312 of FIG. 3, the second control circuit 334 of FIG. 3, the vehicle control circuit 206 of FIG. 2, or a combination thereof. For brevity, the description of embodiments is described with the vehicle 202, although it is understood that the description is not intended to be limited to the vehicle 202 and can apply to the first device 102 of FIG. 1 and the second device 106 of FIG. 1 as well as other embodiments not explicitly described.

In the example shown in FIG. 9, the acquisition module 902 can be coupled to the recognition module 904. The recognition module 904 can be coupled to the classification module 906. The classification module 906 can be coupled to the calculation module 908. The calculation module 908 can be coupled to the multi-media module 610.

The modules can be coupled using wired or wireless connections, by including an output of one module as an input of the other module, by including operations of one module influence operation of the other module, or a combination thereof. The modules can be directly coupled with no intervening structures or objects other than the connector there-between, or indirectly coupled. The modules can be coupled as function calls or procedural calls within the first software 326, the second software 342, or a combination thereof.

In this example, the acquisition module 902 can capture an image for analysis. For example, the acquisition module 902 can capture the current image 410 of FIG. 4, the previous image 404 of FIG. 4, or a combination thereof. Continuing the example, the current image 410, the previous image 404, or a combination thereof can represent a view from the vehicle system 100, the first device 102, the second device 106, the vehicle 202, or a combination thereof.

In a further example, the acquisition module 902 can obtain information or data for analysis. For example, the acquisition module 902 can capture data, such as the time, the speed of the vehicle 202, the location of the vehicle 202, or a combination thereof. For example, the acquisition module 902 can capture the previous time 406 of FIG. 4, the previous location 408 of FIG. 4, the travel direction 422 of FIG. 4, the current time 412 of FIG. 4, the current location 414 of FIG. 4, or a combination thereof.

Also for example, the acquisition module 902 can also obtain the previous image 404, the current image 410, or a combination thereof captured by the visual sensor 214 of FIG. 2. As a specific example, the acquisition module 902 can capture the previous image 404, the current image 410, and other information, or a combination thereof periodically or for a predefined and adjustable frame per second. Also specific examples, the acquisition module 902 can capture every second or longer to a range spanning minutes depending on factors, such as the weather condition 426 of FIG. 4, the previous location 408, the previous time 406, the current location 414, the current time 412, or a combination thereof. The information, captured by the acquisition module 902 can be communicated to other modules in FIG. 9, as an example.

In another example, the vehicle system 100 can have number of sensor devices. Examples of the sensor devices can include the environmental sensors 210 of FIG. 2, the radar sensor 261 of FIG. 2, the accessory sensor 218 of FIG. 2, the volume sensor 220 of FIG. 2, the visual sensor 214, or a combination thereof. The acquisition module 902 can obtain information from each sensor device.

Information captured by the acquisition module 902 can be associated with other information based on the time the information is captured, the location where the data is captured or a combination thereof. For example, the information captured can include a total distance travelled, distance for a trip, the start position 434 of FIG. 4, the end position 436 of FIG. 4, the travel path 432 of FIG. 4, or a combination thereof. In another example, the data captured can include speed and outdoor weather conditions. The flow can progress from the acquisition module 902 to the recognition module 904.

In this example, the recognition module 904 can operate upon the previous image 404, the current image 410, the first portion 604 of FIG. 6, the second portion 606 of FIG. 6, or a combination thereof. The recognition module 904 can identify what is depicted within the previous image 404, the current image 410, or a combination thereof.

For example, the recognition module 904 can identify the moving solid object 418 of FIG. 4, the stationary solid object 424 of FIG. 4, or a combination thereof. The recognition module 904 can also identify the solid object as the moving solid object 418 or as the stationary solid object 424.

In another example, the recognition module 904 can identify the detected feature 504 of FIG. 5, the traversal path 416 of FIG. 4, the non-traversal path 428 of FIG. 4, the travel path 432 of FIG. 4, the medium 420 of FIG. 4, the first medium 804 of FIG. 8, the second medium 806 of FIG. 8, or a combination thereof.

The recognition module 904 can identify the detected feature 504 in a number of ways. As examples, the recognition module 904 can identify the detected feature 504 with solid object detection, image analysis, indirect remote sensing, direct remote sensing, or a combination thereof.

As an example, the detected feature 504 can be determined with solid object detection. The solid object detection can detect a solid object and identify as the solid object as moving for the determination for the moving solid object 418 of FIG. 4. Continuing with the example, the determination can also be based on processing the solid object as identified and determining a change of location between the current image 410 from the previous image 404 or from a series of the images 402.

Also as an example, the solid object detection can detect a solid object and identify as the solid as stationary or non-moving for the determination for the stationary solid object 424 of FIG. 4. Continuing with the example, the determination can also be based on processing the solid object as identified and determining a no change of location between the current image 410 from the previous image 404 or from a series of the images 402.

The recognition module 904 can determine the detected feature 504 as the traversal 416 of FIG. 4, the non-traversal 428 of FIG. 4, the travel path 432 of FIG. 4, or a combination thereof based on map information, the current location, and the image processing of the captured image or images from the acquisition module 904. The recognition module 904 can also determine the number of or type of the medium 420, the first medium 804, the second medium 806, or a combination thereof based on image processing, map location, weather condition, or a combination thereof, as examples. As a specific example, solid object detection can use drones over a freeway to determine the moving solid object 418, the stationary solid object 424, or a combination thereof.

In another example, a "Zodiac"-style rubber raft can be used for the detection of a solid object in water for the medium 420. As a specific example, the waves generated by the raft, interacting with the moving solid object 418, the stationary solid object 424, or a combination thereof, can be used to identify the detected feature 504. The detected feature 504 of the solid object can indicate underwater cave exploration or passenger ship safety. As another specific example, the medium 420 can be a vacuum and the vehicle 202 of FIG. 2 can be a lead cargo vehicle to determine the moving solid object 418, the stationary solid object 424, or a combination thereof for spacecraft docking, or hyperloop accident avoidance.

Image analysis is an example that can be used to analyze for the detected feature 504. Image analysis can use various analytical techniques to assist in the determination of the clear path 411 based on the medium 420, the first medium 804, the second medium 806, or a combination thereof.

For example, with the medium 420 being air, the detected feature 504 can come from reflections from stoplights, and streetlights on wet pavement. Continuing the example, snowflake pattern detection, flying insect detection, or a combination thereof, used together with detection techniques such as LIDAR or radar on rainy or snowy days, can assist to determine the moving solid object 418, the stationary solid object 424, the detected feature 504, or a combination thereof.

In another example as shown in FIG. 5, detecting the path of light caused by refractive index differences between the first medium 804 and the second medium 806 thereby causing a "bent-stick" effect, can be to determine the moving solid object 418, the stationary solid object 424, the detected feature 504, the medium 420, the first medium 804, the second medium 806, or a combination thereof. A further example can include using reflections of light off of the medium 420.

In an example, if the medium 420 is a vacuum, or space, then for hyperloop navigation, a target image placed at the end of a hyperloop tube, or periodically along a curved tube, can be analyzed for clarity to determine the moving solid object 418, the stationary solid object 424, the detected feature 504, the traversal 416, the non-traversal 428, the travel path 432, the medium 420, the first medium 804, the second medium 806, or a combination thereof.

Continuing with a further example, the recognition module 904 can determine the detected feature 504 with Indirect Remote Sensing. Indirect Remote Sensing can use information indirectly generated to determine the clear path 411. As a specific example, if the medium 420 is water, then bow wave formation could be a detected feature 504 for automated river barges.

As examples, the detected feature 504 can be determined by the recognition module 904 can include a method of Direct Remote Sensing. For example, Rayleigh scattering of laser light, or florescence of argon under an electron beam in a medium 420 of air can be used for automated parking, or general self-driving or a combination thereof. In another example, resistivity, or conductivity could be the detected feature 504 used for an automated submarine navigation in a medium 420 of water. In a further example, if the medium 420 is a vacuum, or space, the Casimir effect could be used.

In a further example, the recognition module 904 can sort an item into a category. A category can include a genus, a species, a movement property, a location property, a physical feature, or a combination thereof.

The recognition module 904 can utilize an artificial intelligence model to locate the detected feature 504 around the travel path 432. For example, the recognition module 904 can utilize aspects of the detected feature 504. The recognition module 904 can also utilize information as elevation, curvature, or a combination thereof.

The recognition module 904 can operate the artificial intelligence model to identify portions of the images 402, the third image 502 of FIG. 5, the fourth image 602 of FIG. 6, the fifth image 702 of FIG. 7, the sixth image 802 of FIG. 8, the previous image 404, the current image 410, the first portion 604, the second portion 606, or a combination thereof. The flow can progress from the recognition module 904 to the classification module 906.

FIG.9 depicts an example of the classification module 906. The classification module 906 can categorize the moving solid object 418, the stationary solid object 424, the detected feature 504, the traversal path 416, the horizon 430 o, the non-traversal path 428, the travel path 432, the medium 420, the first medium 804, the second medium 806, or a combination thereof identified by the recognition module 906 within the images 402, the third image 502 of FIG. 5, the fourth image 602 of FIG. 6, the fifth image 702 of FIG. 7, the sixth image 802 of FIG. 8, the previous image 404, the current image 410, the first portion 604, the second portion 606, or a combination thereof.

For example, the classification module 906 can perform the categorization within the field of activity 810 of FIG. 8. Using information from the recognition module 904, the classification module 906 can further categorize the detected feature 504 as the obstruction 512 of FIG. 5, the non-obstruction 514 of FIG. 5, the image category 506 of FIG. 5, or a combination thereof.

The classification module 906 can further perform the categorization based on location of the detected feature 504 is along the travel path 432, the traversal path 416 of FIG. 4, the non-traversal path 428, or a combination thereof. The classification module 906 can determine whether items are positioned in-front of the vehicle 202, in the same lane, close to the obstruction 512, the non-obstruction 514, or a combination thereof.

The classification module 906 can use an accelerometer in the vehicle 202, the visual sensor 214, the first device 102, or a combination thereof to determine the travel direction 422 in relation to the obstruction 512, the non-obstruction 514, or a combination thereof. Further, the classification module 906 can utilize the travel direction 422 to locate the obstruction 512, the non-obstruction 514, or a combination thereof based on the location, elevation, or a combination thereof.

The classification module 906 can categorize the moving solid object 418, identified by the recognition module 904, as the obstruction 512. The classification module 906 can categorize the first portion 604, the second portion 606, and the objects within each portion to determine the first image category 608, the second image category 610, the image category 506, or a combination thereof as the obstruction 512 or the non-obstruction 514.

In this example, the calculation module 908 can determine the clear path 411 for the vehicle 202. As an example, the calculation module 908 can determine the clear path 411 between the vehicle 202 and the obstruction 512, the non-obstruction 514, the image category 506, or a combination thereof. The recognition module 904 and the classification module 906 can identify the obstruction 512, the non-obstruction 514, the image category 506, or a combination thereof as depicted within the images 402, the third image 502, the fourth image 602, the fifth image 702, the sixth image 802, or a combination thereof.

As an example, the calculation module 908 can utilize or operate the artificial intelligence model to determine dimensions of the clear path 411 based on the current location 414, the previous location 408, or a combination thereof. The calculation module 908 can also determine dimensions of the obstruction 512 the non-obstruction 514, the image category 506, or a combination thereof. The current location 414, the previous location 408, or a combination thereof can include a GPS coordinate, a length, a width, a perimeter, or a combination thereof. The calculation module 908 can be used to calculate or generate the distance 516 of FIG. 5 between the vehicle 202 and the obstruction 512, the non-obstruction 514, the image category 506, or a combination thereof.

In another example, the calculation module 908 can determine one or multiple instances of the clear path 411within the images 402, the third image 502, the fourth image 602, the fifth image 702, the sixth image 802 or a combination thereof. Continuing with the example, the calculation module 908 can alter the travel path 432 of FIG. 4 based on the location of the clear path 411.

The calculation module 908 can search for the image category 506, the first image category 608, the second image category 610, the current location 414, the previous location 408 or a combination thereof of the clear path 411. The calculation module 908 can look-up a dimensions, sizes, a length, a width, a perimeter, or a combination thereof of the clear path 411, the obstruction 512, the non-obstruction 514, or a combination thereof.

As a specific example, the calculation module 908 can determine the location, and the length for the clear path 411 in the images 402, the third image 502, the forth image 602, the fifth image 702, the sixth image 802, or a combination thereof to aid in determining the travel path 432.

The calculation module 908 can also record the distance 516 of FIG. 5. The calculation module 908 also record the distance as part of the trip to indicate the travel path 432, the previous location 408, the current location 414 for the particular points of the trip. The recorded information for the distance 516 can be utilized to assist in the determination of the travel path 432 of the vehicle 202.

In this embodiment, the calculation module 908 can utilize the clear path 411 to combine with other factors such as the weather condition 426 of FIG. 4, the start position 434, the end position 436, the image category 506, the first portion 604, the second portion 606, the first image category 608, the second image category 610, the obstruction 512, the non-obstruction 514, so that the clear path 411, the traversal path 416, the non-traversal path 428, the travel path 432, or a combination thereof can be given and potentially used for coaching, driving behavior, vehicle control, navigation instruction, or a combination thereof. The flow can progress from the calculation module 908 to the multi-media module 910.

In this example, the multi-media module 910 can depict the images 402, the third image 502, the fourth image 602, the fifth image 702, the sixth image 802, or a combination thereof. As an example, the multi-media module 910 can provide visual depictions of or information relating to the distance 516, the travel path 432, the clear path 411, the traversal path 416, the non-traversal path 428, or a combination thereof. In a further example, the multi-media module 908 can depict the first portion 604, the second portion 606 within the images 402, the third image 502, the fourth image 602, the fifth image 702, the sixth image 802, or a combination thereof.

The multi-media module 910 can present an image, an alphanumeric character, a sound, a video, or a combination thereof. For example, the multi-media module 910 can include audio alerts, visual alerts or a combination thereof. The alerts can be tiered. For example, the alerts can include a low-level alert, followed by a high-level alert. Continuing the example, the different tiers of warning can alert a user as to conditions of the clear path 411, the location of an obstruction 512, the non-obstruction 514, or a combination thereof.

The multi-media module 910 can be implemented in a number of ways with hardware, software, or a combination thereof. For example, the multi-media module 910 can be a monitor, or a screen such the first device 102 as a cellular phone, a heads-up display (HUD) in the vehicle 202. In another example, the multi-media module 910 can be the vehicle display 259 of FIG. 2.

It has been discovered that the vehicle system 100 can provide the clear path 411 on the traversal path 416 along the travel path 432 in real-time and lower cost. The vehicle system 100 utilizes a trained artificial intelligence model to use minimal information. The minimal information is the image category 506 to ascertain the clear path 411. The detected feature 504 can help to determine the image category 506. The detected feature 504 can look to the medium 420 for the image category 506.

The modules described in this application can be hardware implementation or hardware accelerators, including passive circuitry, active circuitry, or both, in the first storage circuit 314, the second storage circuit 346, the first control circuit 312, the second control circuit 334, or a combination thereof. The modules can also be hardware implementation or hardware accelerators, including passive circuitry, active circuitry, or both, within the first device 102, the second device 106, or a combination thereof but outside of the first storage circuit 314, the second storage circuit 346, the first control circuit 312, the second control circuit 334, or a combination thereof.

The vehicle system 100 has been described with module functions or order as an example. The vehicle system 100 can partition the modules differently or order the modules differently. For example, the loops can be different or be eliminated.

For illustrative purposes, the various modules have been described as being specific to the first device 102, the second device 106, the vehicle 202, or a combination thereof. However, it is understood that the modules can be distributed differently. For example, the various modules can be implemented in a different device, or the functionalities of the modules can be distributed across multiple devices. Also as an example, the various modules can be stored in a non-transitory memory medium.

As a more specific example, one or more modules described above can be stored in the non-transitory memory medium for distribution to a different system, a different device, a different user, or a combination thereof, for manufacturing, or a combination thereof. Also as a more specific example, the modules described above can be implemented or stored using a single hardware unit or circuit, such as a chip or a processor, or across multiple hardware units or circuits.

The modules described in this application can be stored in the non-transitory computer readable medium. The first storage circuit 314, the second storage circuit 346, or a combination thereof can represent the non-transitory computer readable medium. The first storage circuit 314, the second storage circuit 346, the vehicle storage circuit 208, or a combination thereof, or a portion therein can be removable from the first device 102, the second device 106, and the vehicle 202. Examples of the non-transitory computer readable medium can be a non-volatile memory card or stick, an external hard disk drive, a tape cassette, or an optical disk.

The physical transformation of the detected feature 504 and the resulting image category 506 generated from the detected feature 504 affects the real world in terms of generating alerts with the distance 516 and affecting the operation of the vehicle 202 to operate at the distance 516 along the clear path 411. The change in operation of the vehicle 202 can affect the operation of the vehicle system 100 not only for the clear path 411 being generated by the image category 506 but also the recording of the information for the travel path 432.

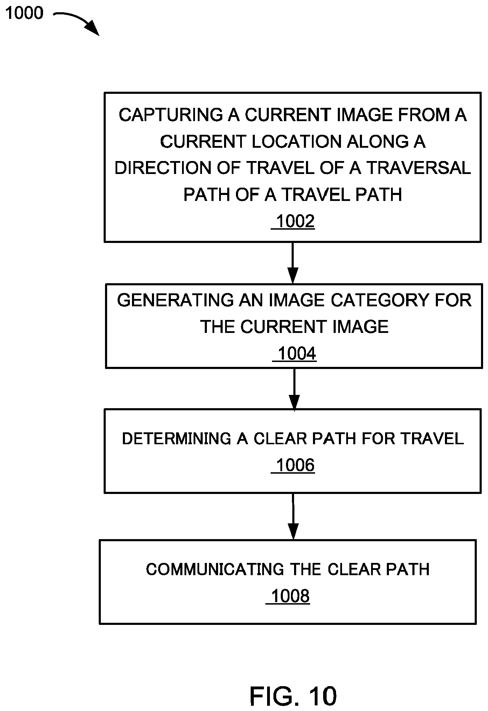

Referring now to FIG. 10, therein is shown a flow chart of a method 1000 of operation of a vehicle system 100 in an embodiment of the present invention. The method 1000 includes: capturing a current image from a current location towards a travel direction along a travel path in a block 1002; generating an image category for the current image based on a weather condition, the current location, or a combination thereof in a block 1004; determining a clear path towards the travel direction of the travel path based on the image category, the current image, and a previous image in a block 1006; and communicating the clear path for assisting in operation of a vehicle in a block 1008.

The method 1000 further includes identifying a first portion of the current image; identifying a second portion of the current image; wherein generating the image category for the current image includes generating a first image category for the first portion, generating a second image category for the second portion; and determining the clear path towards the travel direction includes determining the clear path towards the direction of travel based on the first image category, the second image category.

The method 1000 further includes capturing the previous image from a previous location along the of travel direction of the travel path; generating a further image category for the previous image based on the weather condition, the previous location, or a combination thereof; and wherein determining the clear path towards the direction of travel of the travel path includes determining the clear path based on the image category for the current image, the further image category for the previous image, the current image, and the previous image.

The method 1000 further includes capturing the current image of a laser pattern projected along the travel path; determining a detected feature from the current image based on the laser pattern; generating a further image category for the current image based on the detected feature; and wherein determining the clear path towards the direction of travel of the travel path includes determining the clear path based on the further image category.

The method 1000 further includes generating the image category for the current image based on a detected feature from the current image, a medium, or a combination thereof.

The method 1000 further includes generating the image category for the previous image based on a detected feature from the previous image, a medium, or a combination thereof.

The method 1000 further includes generating the image category for the current image based on a detected feature, a first medium, a second medium or a combination thereof.

The resulting method, process, apparatus, device, product, and/or system is straightforward, cost-effective, uncomplicated, highly versatile, accurate, sensitive, and effective, and can be implemented by adapting known components for ready, efficient, and economical manufacturing, application, and utilization. Another important aspect of an embodiment of the present invention is that it valuably supports and services the historical trend of reducing costs, simplifying systems, and increasing performance.

These and other valuable aspects of an embodiment of the present invention consequently further the state of the technology to at least the next level.

While the invention has been described in conjunction with a specific best mode, it is to be understood that many alternatives, modifications, and variations will be apparent to those skilled in the art in light of the foregoing description. Accordingly, it is intended to embrace all such alternatives, modifications, and variations that fall within the scope of the included claims. All matters set forth herein or shown in the accompanying drawings are to be interpreted in an illustrative and non-limiting sense.

## Claims

1. A method (1000) of operation of a vehicle system (100) comprising:
capturing a current image (410) from a current location (414) towards a travel direction (422) along a travel path (432);
generating an image category (506) for the current image (410) based on a weather condition (426), the current location (414), or a combination thereof;
determining a clear path (510) towards the travel direction (422) of the travel path (432) based on the image category (506), the current image (410), and a previous image (404); and
communicating the clear path (510) for assisting in operation of a vehicle (202).

2. The method (1000) as claimed in claim 1 further comprising:
identifying a first portion (604) of the current image (410);
identifying a second portion (606) of the current image (410); wherein:
generating the image category (506) for the current image includes:
generating a first image category (608) for the first portion (604),
generating a second image category (610) for the second portion (606); and determining the clear path (510) towards the travel direction (422) includes:
determining the clear path (510) towards the travel direction (422) based on the first image category (608), the second image category (610).

3. The method (1000) as claimed in claim 1 or 2, further comprising:
capturing the previous image (404) from a previous location (408) along the travel direction (422) of the travel path (432);
generating a further image category (506) for the previous image (404) based on the weather condition (426), the previous location (408), or a combination thereof; and
wherein determining the clear path (510) towards the travel direction (422) of the travel path (432) includes:
determining the clear path (510) based on the image category (506) for the current image (410), the further image category (506) for the previous image (404), the current image (410), and the previous image (404).

4. The method (1000) as claimed in any of the preceding claims, further comprising:
capturing the current image (410) of a laser pattern (518) projected along the travel path (432);
determining a detected feature (504) from the current image (410) based on the laser pattern (518);
generating a further image category (506) for the current image (410) based on the detected feature (518); and
wherein determining the clear path (510) towards the travel direction (422) of the travel path (432) includes:
determining the clear path (510) based on the further image category (506).

5. The method (1000) as claimed in any of the preceding claims, further comprising:
generating the image category (506) for the current image (410) based on a detected feature (504) from the current image (410), a medium (420), or a combination thereof.

6. The method (1000) as claimed in any of the preceding claims, further comprising:
generating the image category (506) for the previous image (404) based on a detected feature (504) from the previous image (404), a medium (420), or a combination thereof.

7. The method (1000) as claimed in any of the preceding claims, further comprising:
generating the image category (506) for the current image (410) based on a detected feature (504), a first medium (804), a second medium (806) or a combination thereof.

8. A vehicle system (100) comprising:
a communication circuit (204) configured to:
receive a current image (410) from a current location (414) along a travel direction (422) of a traversal path (416) of a travel path (432) of a first device (102), second device (106) or a combination thereof;
a control circuit (206), coupled to the communication circuit (204), configured to:
generate an image category (506) for the current image (410) based on a weather condition (426), the current location (414), or a combination thereof,
determine a clear path (510) towards the travel direction (422) of the travel path (432) based on the image category (506), the current image (410), and a previous image (404), and
communicate the clear path (510) for assistance in operating a vehicle (202).

9. The vehicle system (100) as claimed in claim 8 wherein the control circuit (206) is further configured to:
identify a first portion (604) of the current image (410);
identify a second portion (606) of the current image (410);
generate a first image category (608) for the first portion (604);
generate a second image category (610) for the second portion (606); and
determine the clear path (510) towards the travel direction (422) based on the first image category (608), the second image category (610).

10. The vehicle system (100) as claimed in claim 8 or 9, wherein the control circuit (206) is further configured to:
capture the previous image (404) from a previous location (408) along the traveldirection (422) of the travel path (432);
generate a further image category (506) for the previous image (404) based on the weather condition (426), the previous location (408), or a combination thereof; and
determine the clear path (510) based on the image category (506) for the current image (410), the further image category (506) for the previous image (404), the current image (410), and the previous image (404).

11. The vehicle system (100) as claimed in any of the claims 8 to 10, wherein the control circuit (206) is further configured to:
capture the current image (410) of a laser pattern (518) projected along the travel path (432);
determine a detected feature (504) from the current image (410) based on the laser pattern (518);
generate a further image category (506) for the current image (410) based on the detected feature (518); and
determine the clear path (510) based on the further image category (506).

12. The vehicle system (100) as claimed in any of the claims 8 to 11, wherein the control circuit (206) is further configured to:
generate the image category (506) for the current image (410) based on a detected feature (504) from the current image (410), a medium (420), or a combination thereof.

13. The vehicle system (100) as claimed in any of the claims 8 to 12, wherein the control circuit (206) is further configured to:
generate the image category (506) for the previous image (404) based on a detected feature (504) from the previous image (404), a medium (420), or a combination thereof.

14. The vehicle system (100) as claimed in any of the claims 8 to 13, wherein the control circuit (206) is further configured to:
generate the image category (506) for the current image (410) based on a detected feature (504), a first medium (804), a second medium (806) or a combination thereof.
